# EUROPEAN PATENT SPECIFICATION

(11) **EP 3 685 198 B1**
(45) Date of publication and mention of the grant of the patent: **07.06.2023**
(21) Application number: 18768921.1
(22) Date of filing: 19.09.2018
(51) Int. Cl.: G01V 3/10, B60L 53/12, B60L 53/30, H02J 50/60, H02J 50/12, H04J 7/02

(54) **DEVICE AND METHOD FOR FOREIGN OBJECT DETECTION IN WIRELESS ENERGY TRANSFER**
VORRICHTUNG UND VERFAHREN ZUR FREMDKÖRPERDETEKTION BEI DRAHTLOSER ENERGIEÜBERTRAGUNG
DISPOSITIF ET PROCÉDÉ DE DÉTECTION D'OBJET ÉTRANGER DANS UN TRANSFERT D'ÉNERGIE SANS FIL

(30) Priority: 22.09.2017 NL 2019616
(43) Date of publication of application: 29.07.2020
(73) Proprietor: Prodrive Technologies Innovation Services B.V., 5692 EM Son en Breugel (NL)
(72) Inventor: LEMMEN, Erik, 5628 BC Eindhoven (NL); VAN GRUNSVEN, Thomas Adrianus Maria, 5476 LZ Vorstenbosch (NL); VOS, Danny, 3930 Hamont-Achel (BE)
(74) Representative: IP Maison
(86) International application number: PCT/EP2018/075359
(87) International publication number: WO 2019/057777

(56) References cited:
- WO-A1-2013/189530
- WO-A1-2016/076733
- US-A1- 2012 146 580
- US-A1- 2012 181 875
- US-A1- 2013 099 592
- US-A1- 2014 103 732
- US-A1- 2014 339 907
- US-A1- 2016 276 875
- US-A1- 2016 372 980

## Description

### Technical field

The present invention is related to devices and methods for detecting foreign objects within a magnetic field space, in particular in the magnetic field space of a wireless power transfer system.

### Background art

In wireless power transfer by means of induction an electromagnetic field is generated by a transmitter coil and received by a receiver coil. Depending on various parameters, e.g. the type of inductive coupling or distance between the transmitter coil and the receiver coil, the region where the electromagnetic field is produced may be accessible to foreign objects. These foreign objects may result in energy loss and produce hazardous situations when they react to the generated electromagnetic field. Metallic or conductive foreign objects for instance may absorb the electromagnetic field in part through induced eddy currents and as a consequence generate heat. For safety reasons and to reduce energy loss it is important that these foreign objects can be detected accurately.

For low power applications like the charging of a mobile phone a foreign object can be detected by determining the difference between the transmitted power and the received power. However, in high power applications the amount of energy lost is low compared to the total amount of transmitted and received power. This makes it difficult to determine the presence of a foreign object by determining the difference between the transmitted power and the received power. It is particularly difficult to detect small foreign objects that will barely influence the transmission efficiency between the transmitter coil and the receiver coil, but that may produce hazardous situations by producing considerable heat in a small volume.

US2015/0323694 describes a foreign object detection device in which the presence of a foreign object is measured with an array of detector coils acting as magnetic loop antennas. The device comprises two types of coils: on the one hand a source coil, which can be the power transmitter coil used for wireless power transfer or one or more specific auxiliary coils and which are driven for generating a magnetic field, and on the other hand one or more detector coils which are held passive and act as receiver. The magnetic field generated by the source coil induces a current and voltage in the one or more detector coils. The magnetic field, and therefore the voltage and current induced in the detector coil, is influenced by foreign objects placed in the vicinity of the detector coils.

The auxiliary coils are used at times when the power transmitter coil is not providing a magnetic field, e.g. when no power is transferred. The auxiliary coils are therefore required at times when a vehicle is approaching towards the power transmitting coil and before charging operation begins. A disadvantage of the above system is therefore that two sets of coils - auxiliary coils and detector coils - are needed for foreign object detection, which adds complexity and cost to the power transfer system.

Another disadvantage of the above system is that the coupling between the transmitter coil and the set of detector coils is not only depending on the presence of foreign objects, but also very sensitive to the presence of non-dissipating magnetic material (ferrite). Within wireless power transfer systems, non-dissipating magnetic material with a µᵣ > 1 (ferrite) is required at both the power transmitting side and the power receiver side in order to shape the magnetic field. Due to mechanical variation of the assembly (e.g. temperature variation or mechanical stress), the position of the ferrite with respect to the foreign object detector coils may vary, possibly resulting in false triggers of the foreign object detection (FOD) system. The sensitivity to this mechanical variation is typically much larger than the sensitivity to a typical small foreign object (e.g. a small coin).

US 9,178,361 describes the use of decay in a resonant circuit to detect foreign objects in wireless power transfer applications. The resonant circuit comprises a detection coil and a capacitor, which form a tank circuit. This tank circuit can be charged by an AC or a DC external power source. When the external power source is subsequently removed, the energy will oscillate between the coil and the capacitor. The amplitude of this oscillation and thus the amount of energy stored in the tank circuit will dissipate with time. In the presence of a foreign object the speed of this decay will increase. Therefore, this speed of decay can be used to detect the presence of foreign objects. Foreign objects that have a higher coupling factor with the detection coil will be detected more easily, because the speed of decay increases with increasing coupling factor. With such a FOD detection system, the influence of parasitic components can be largely reduced.

A disadvantage of the above system is that the intermittent character of charging the detection circuitry and subsequently measuring decay does not allow a continuous detection of foreign objects. In addition, the inductive power transfer system must be switched off during detection procedure, since the magnetic field for power transfer influences the magnetic field for FOD. By consequence, it becomes very difficult to detect foreign objects during active periods of inductive power transfer.

US 2016/0372980 describes an object detection system for an inductive power transfer system, comprising an LC oscillating circuit and a driving circuit. A frequency of an AC output voltage of the driving circuit that is provided to the LC oscillating circuit is controlled. The input power to the driving circuit is captured. A foreign object is detected when the input power increases. One drawback of the above object detection system is that the resonant frequency, and therefore also the input power, is affected by a changing environment and changes within the system, which may lead to less reliable object detection.

### Summary of the invention

It is an object of the present invention to provide systems and methods for detecting foreign objects in a magnetic field which are less complex and/or more effective. It is an object of the present invention to provide such systems that are able to discriminate between relevant and non-relevant foreign objects with an increased detection range. It is an object to provide such systems which can operate independently of the operation of the wireless (inductive) power transfer system. It is an object of the present invention to provide systems and methods for detecting foreign objects in a magnetic field which are less sensitive to mechanical variations within the detecting device and/or which are more reliable in detecting the foreign objects, in particular due to a better repeatability and/or a reduced influence from environmental changes. These objects are achieved by an apparatus according to claim 1 and a method according to claim 12.

According to a first aspect of the invention, there is therefore provided an apparatus for wireless or inductive power transfer as set out in the appended claims. The apparatus comprises a power transfer coil configured for inductive power transfer. The power transfer coil defines a first plane, i.e. a plane of winding of the coil, which is perpendicular to an axis (of winding) of the coil. The power transfer coil may comprise multiple windings, which can be wound in the first plane, or can be stacked on top of one another, and any plane of the stack may be considered as the first plane. The apparatus further comprises a foreign object detecting device. The foreign object detecting device comprises at least one detection coil defining a second plane. The second plane can be any plane of winding of the detection coil, e.g. which is perpendicular to an axis (of winding) of the coil. The second plane is advantageously arranged substantially parallel to the first plane and the at least one detection coil and the power transfer coil are advantageously superposed on one another, e.g. stacked. Each of the at least one detection coil encloses a first area (considered in the second plane) which at least partially overlaps with a second area enclosed by the power transfer coil (considered in the first plane). The first area and the second area refer to the cross sectional areas of the detection coil and of the power transfer coil, respectively. The foreign object detecting device comprises a driver circuit coupled to the at least one detection coil for generating a magnetic field with the at least one detection coil, and a control unit, which may be coupled to the driver circuit, and is configured to measure a value or quantity representative of a damping of the magnetic field.

According to one aspect, the driver circuit is configured to generate a magnetic field of steady magnitude with the at least one detection coil. The control unit is configured to measure an electrical power supplied to the at least one detection coil. The control unit is advantageously configured to control the electrical power to maintain the magnetic field at a steady magnitude by controlling an amplitude of oscillation in the at least one detection coil. The electrical power is a representative measure of damping of the magnetic field and can be measured continuously. The control unit can be configured to compare the electrical power measured with a threshold value.

According to another aspect, which can be provided in addition, or alternative to the previous aspect, each of the at least one detection coil is positioned relative to the power transfer coil such that a magnetic flux generated by the power transfer coil through a first portion of the first area and a magnetic flux generated by the power transfer coil through a second portion of the first area are of opposite sign and of substantial equal magnitude, when due account is taken of a polarity of the detection coil in the first portion and in the second portion, resulting in a small or zero net magnetic flux. This means that the magnetic field of the power transfer coil induces a zero or a very small current in the detection coil, e.g. when the power transfer coil is active. As a result, each detection coil is substantially uncoupled from, or very weakly coupled to, the power transfer coil, which can be expressed as the detection coil having a magnetic coupling coefficient with respect to the power transfer coil of 0.2 or less, preferably 0.15 or less, preferably 0.1 or less, preferably 0.05 or less.

The polarity of the detection coil refers to a manner of winding of the coil and/or a way in which an (instantaneous) electric current flows through the loop(s) of the coil. By way of example, the polarity of a coil formed by one or more loops of a conductive wire all wound in the same direction will be the same throughout the coil, i.e. the magnetic north and south poles are the same for all loops. On the other hand, in a so called figure-8 coil, in which the loops are twisted 180° to form two lobes, the polarity in the two lobes will be reversed since the current flowing in the loop(s) of one lobe will flow in a counter direction compared to the current in the loop(s) of the other lobe. As a result, the magnetic north pole for one lobe will point in one direction perpendicular to the cross sectional surface of the lobe, and will point in the opposite direction in the other lobe. The polarity of the detection coil defines a directionality of the cross sectional surface (or area) of the coil. Hence, the polarity of a coil (or of a loop of the coil) defines the direction (i.e., sense) of the normal of the cross sectional surface of the coil or loop. In a figure-8 coil, the surface normal in the two lobes will be opposite.

The local magnetic flux refers to the vector product of the local magnetic field component and the local surface normal (depending on the coil polarity) in that point. The net or resulting magnetic flux through a surface refers to the surface integral of the local magnetic flux over the surface. Unless stated otherwise, the expression magnetic flux as described herein will refer to a net or resulting magnetic flux.

According to aspects of the present invention, such a weak magnetic coupling can be obtained in different ways while positioning the detection coil within the magnetic field of the power transfer coil. In a first option, the first area comprises different area portions. The detection coil can be positioned such that the first portion of the first area of the detection coil overlaps the area enclosed by the power transfer coil (i.e. the second area as defined above) and wherein the second portion of the first area is located outside the second area. In such case, the magnetic flux generated by the power transfer coil through the first and second portions of the first area will have opposite sign. By appropriately positioning the detection coil relative to the power transfer coil, e.g. by appropriate positioning the first portion and the second portion, a very small or zero net magnetic flux through the cross sectional area of the detection coil (the first area) can be obtained. Alternatively, the at least one detection coil can be shaped as so-called figure-8 coils or butterfly coils. The lobes of the figure 8-coils can enclose a same surface area and e.g. be positioned at symmetrical locations in the magnetic field of the power transfer coil, e.g. the magnetic field is symmetrical with respect to a mid-plane between the lobes. By so doing, the electric currents induced in the lobes due to the magnetic field of the power transfer coil will oppose each other and will at least in part cancel each other out since the two lobes have reversed polarity, resulting in a weak magnetic coupling. The lobes of the figure 8-coil may have different shape or surface area and be placed in the magnetic field of the power transfer coil at such positions that the magnetic flux generated by the power transfer coil through the area enclosed by the lobes is substantially the same (but of opposite sign). As a result, an induced electromotive force in each lobe will substantially cancel out between the lobes which makes the detection coil weakly coupled to the power transfer coil.

According to a second aspect of the invention, there is provided a method for detecting foreign objects in a space of a first magnetic field of a power transfer system, as set out in the appended claims. In a first step, a second magnetic field is induced in the space of the first magnetic field. The second magnetic field is induced with at least one detection coil different from a power transfer coil generating the first magnetic field. Each of the at least one detection coil and the power transfer coil advantageously have parallel planes, e.g. they have parallel axes of winding of the coils, the plane of the coils being defined as perpendicular to the axes of winding. Each of the at least one detection coil encloses a first area which at least partially overlaps with a second area enclosed by the power transfer coil. In a second step, a value indicative of a damping of the second magnetic field is measured, advantageously continuously. Measuring the value comprises measuring and controlling an electrical power supplied to the at least one detection coil to maintain an amplitude of oscillation in the at least one detection coil steady for detecting foreign objects.

Each of the at least one detection coil is positioned relative to the power transfer coil advantageously such that a magnetic flux generated by the power transfer coil through a first portion of the first area and a magnetic flux generated by the power transfer coil through a second portion of the first area, taking account of a polarity of the detection coil in the first portion and in the second portion, are of opposite sign and of substantial equal magnitude. As a result, advantageously a magnetic coupling coefficient between the two is 0.2 or less, preferably 0.15 or less, preferably 0.1 or less, preferably 0.05 or less.

In apparatuses and methods according to aspects of the present invention, the foreign object detector actually forms a second transmitter that transmits inductive energy in the same space as the primary transmitter of the power transfer system. However, this second transmitter has no receiver on the opposite (e.g., vehicle) side. Therefore, all power transferred to the transmission circuit can be regarded as losses. Foreign objects present in the magnetic field will absorb energy and dampen the magnetic field transmitted by the detection coil, which can be sensed. There are different ways of measuring damping, such as measuring a time of decay of the field magnitude, or measuring the power required to maintain a field of steady magnitude. One benefit of measuring the power required to maintain a field of steady magnitude is that the detection of foreign objects can be performed continuously. In aspects of the present invention, the detection coils are advantageously so positioned and/or shaped that they are substantially uncoupled from or weakly magnetically coupled to the power transfer coil, such that the (primary) magnetic field for power transfer does not interfere with the magnetic field of foreign object detection and measurements can be made during power transfer or charging operation, which increases reliability of foreign object detection. In aspects of the present invention, no additional receiver coils acting like antennas are needed, which makes the system less complex and saves space and materials. Additionally, since ferrites only affect the magnetic path but have no substantial losses, the system is much more robust against mechanical variations.

Advantageously, the detection coil(s) can be positioned partially overlapping and partially non-overlapping with the power transfer coil, such that the (primary) magnetic field for power transfer is weakly coupled with the magnetic field of foreign object detection.

Additionally, in advantageous aspects, there is no restriction on the size of the detection coils, which may be made sufficiently large in order to detect foreign objects at high elevational positions. The detection space may substantially span the distance between power transmitter coil and power receiver coil in a wireless charging system. For instance, a ratio between the first area to the second area is at least 1:6. In an advantageous embodiments the ratios are at least 1:4, for instance 1:2 or 1:1. In some embodiments the first area may also be larger than the second area.

### Brief description of the figures

Aspects of the invention will now be described in more detail with reference to the appended drawings, wherein same reference numerals illustrate same features and wherein:
Figure 1 represents an inductive power transfer system according to aspects of the invention;
Figure 2 represents an exploded perspective view of an apparatus according to aspects of the present invention, in the form of a ground assembly or base pad comprising a power transfer coil and superposed detection coils.;
Figures 3a-g represent possible configurations of superposition of power transmitter coil and one or more detection coils for foreign object detection according to aspects of the invention, in which the power transmitter coil is wound in a figure-O shape;
Figures 4a-c represent possible alternative configurations of superposition of power transmitter coil and one or more detection coils for foreign object detection according to aspects of the invention, in which the power transmitter coil is wound in a figure-8 shape;
Figure 5 represents an electric diagram of a driver circuit and control unit according to aspects of the invention, for driving a foreign object detection coil and detecting a foreign object;
Figure 6 represents a block diagram of the control unit of the circuit of Fig. 5.

### Description of embodiments

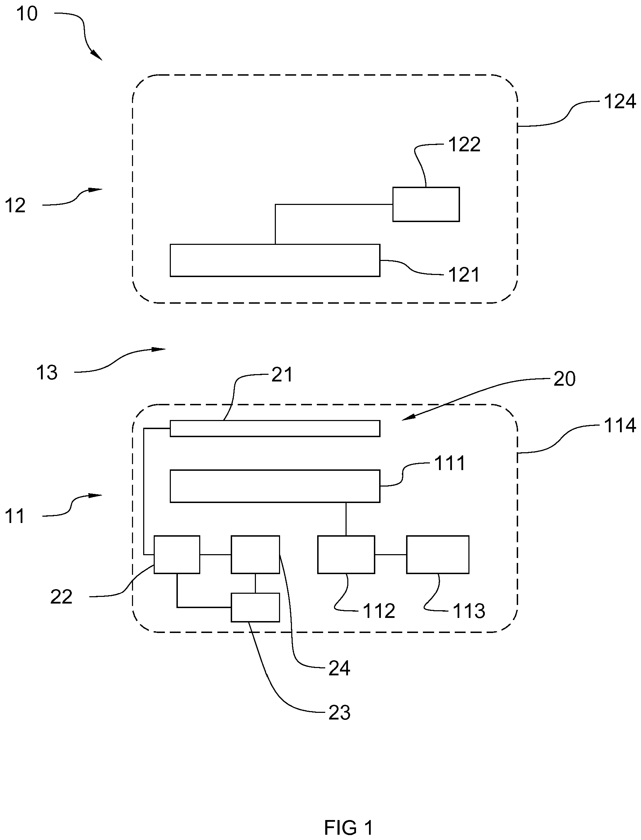

Referring to Fig. 1, a wireless inductive power transfer (IPT) system 10 is illustrated. The IPT system 10 comprises a transmitter system 11, which includes a power source 113, transmitter electronics 112, and a power transmitter coil 111. Transmitter system 11 is configured for generating a magnetic field for inductive power transfer. To this end, the power source 113 supplies the transmitter electronics 112 with power. The power can be alternating current (AC) or direct current (DC). The transmitter electronics 112 conditions the power so that the power transmitter coil 111 receives an electrical AC current which generates an electromagnetic field.

The IPT system 10 further comprises a receiver system 12, which includes a power receiver coil 121, and receiver electronics 122. An interface 13 separates the transmitter system 11 from the receiver system 12. The interface typically comprises an air gap spacing apart transmitter system 11 and receiver system 12. The electromagnetic field generated by power transmitting coil 111 is inductively coupled into the power receiver coil 121. In this way, power can be transferred across the interface 13 disposed between the power transmitter coil 111 and the power receiver coil 121. Depending on the nature of the interface 13, the interface can absorb or otherwise attenuate the transmitted power so that the received power is less than the transmitted power.

Objects located in the power transmission path, i.e. in the magnetic field of power transmitter coil 111, can disturb the power transfer. The power transmission path extends across the interface 13. There are two broad types of objects that can absorb energy transferred in the IPT system. The first type includes conductive components or objects that are part of the device being powered or charged by the IPT system 10. These conductive components of the device are often called friendly parasitic components. The second type includes conductive parts or objects that are not part of the device being charged. These are referred to as foreign objects. Some of these foreign objects will interact with the magnetic field of the IPT system and produce heat. The heating of the foreign object may be either caused by its electrical resistance for the eddy currents induced in foreign objects comprising conductive non-magnetic materials (e.g. aluminium or copper), or by magnetic hysteresis losses in foreign objects comprising non-conductive magnetic materials (e.g. ferrites), or by a combination of both in foreign objects comprising conductive magnetic materials (e.g. iron) or in foreign objects comprising conductive non-magnetic materials and non-conductive magnetic materials (e.g. metal alloy or metal composite).

Typically, the power transmitter coil 111 is encased in a housing 114, which may further encase the transmitter electronics 112 and optionally the power source 113. Housing 114 and the components contained therein may be referred to as a base pad or ground assembly. Optionally, another housing 124 encases the power receiver coil 121 and possibly receiver electronics 122. Housing 124 and the components contained therein may be referred to as a mobile pad or mobile assembly, e.g. a vehicle assembly. Portions of the housing 114 and of the housing 124 can be located in the interface 13 and in the power transmission path.

For purposes of the present description, the power transmitter coil 111 and the power receiver coil 121 may both be referred to as (power) transfer coils.

IPT system 10 further comprises a foreign object detection (FOD) device 20 according to aspects of the invention. FOD device 20 comprises a detection coil 21 coupled to a driver circuit 22. Driver circuit 22 is charged by a power source, which may be the power source 113 that powers the transmitter system 11, or may be a separate source 23. Power sources 113 and 23 may refer to interfaces receiving power form an external power supply. A control unit 24 is coupled to driver circuit 22 and may be coupled to power source 23.

As shown in Fig. 1, FOD device 20 is encased inside housing 114 of the transmitter system 11. Advantageously, detection coil 21 and power transmitter coil 111 are superposed. As illustrated, detection coil 21 is disposed on top of power transmitter coil 111. Detection coil 21 can alternatively be disposed underneath power transmitter coil 111. It is alternatively or additionally possible to encase the FOD device 20 inside housing 124 of the receiver system 12 in a similar manner, or both inside housing 124 of the receiver system 12 and housing 114 of the transmitter system 11.

It will be convenient to note that either one of the power transfer coils, the detection coils, or both can be planar coils, in which multiple loops of a conductive wire or cable are wound in a same plane. Alternatively, either coils can comprise windings in three-dimensional space, such as forming a helix.

The driver circuit 22 is configured for supplying an AC current to detection coil 21 which generates a magnetic field which may be distinct from the magnetic field generated by the power transmitter coil 111. The magnetic field of detection coil 21 extends at least through a portion of the power transmission path, e.g. at least through a portion of the interface 13.

The frequency of the current in detection coil 21 is advantageously different from the frequency of the current in power transmitter coil 111. Typically a small power dissipation will occur in the detection coil 21, the driver circuit 22 and other parasitic components of FOD device 20 and/or IPT system 10, so that some electric power is continuously required to maintain a steady magnetic field.

According to one advantageous aspect, detection coil 21 is driven with a resonant frequency. To this end, detection coil 21 and driver circuit 22 may together form a resonant tank circuit. Using a resonant tank circuit may improve the detection sensitivity of the FOD device 20. By using a resonant circuit, in particular with a capacitor arranged in parallel with the coil, the driving circuit may be simplified as it reduces the current and/or voltages in the driving circuit.

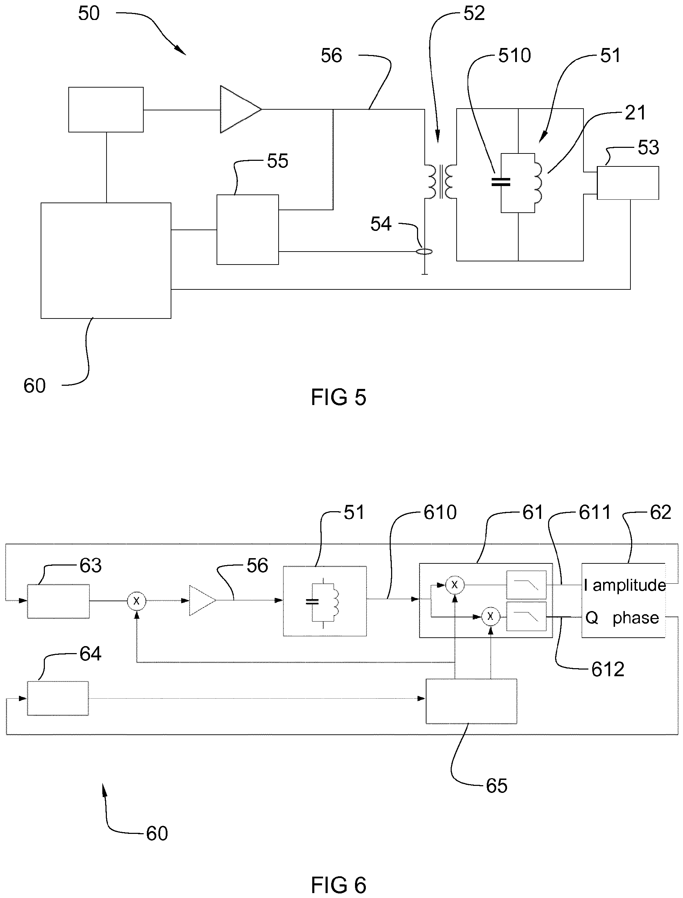

Referring to Fig. 5, an example driver circuit 50 comprises a resonant tank circuit 51 formed of detection coil 21 connected in parallel with a capacitor 510. Tank circuit 51 is connected to the secondary side of a transformer 52, advantageously realizing a voltage step up. A voltage metering circuit 53 is coupled over tank circuit 51 and is configured to measure an amplitude of the resonance oscillation. The voltage metering circuit 53 is coupled to the control unit 60 in order to advantageously control the amplitude of oscillation to a steady or constant, and possibly predefined value. Alternatively, the voltage metering circuit 53 can be replaced with a current metering circuit to measure a current amplitude of the oscillation in the tank circuit 51. The primary side of transformer 52 is advantageously supplied with a controlled voltage and/or current. The voltage and current are advantageously measured by current meter 54 and voltage meter 55. These values are advantageously converted to a digital value, e.g. by analog to digital converters (ADC) which may be arranged in block 55. The current meter 54 and voltage meter 55 are coupled to control unit 60.

Control unit 60 may be configured to determine an electrical power supplied to the primary side of transformer 52, and hence to the tank circuit 51, on the basis of the values measured by current meter 54 and voltage meter 55. Control unit 60 may be configured to control a voltage and/or current that is applied to the primary side of transformer 52, e.g. based on the signal which is fed back by voltage metering circuit 53.

One example implementation of control unit 60 is illustrated in Fig. 6. The control unit 60 implements a coherent detection method to determine the power injected in resonant tank circuit 51. This reduces the detection bandwidth to a narrow band around the oscillation frequency of the resonant tank which greatly increases the detection sensitivity by filtering external disturbances. The oscillation measured e.g. with metering circuit 53 is input at 610 into block 61. In block 61, the oscillation signal is correlated with two orthogonal waveforms to generate an in-phase signal 611 and a quadrature signal 612. From these signals the amplitude and phase information is extracted in block 62 and then fed into separate controllers 63, 64. The amplitude controller 63 is configured to adjust the output 56 of the driver circuit for maintaining a constant oscillation amplitude. The phase controller 64 is configured to adjust the oscillation frequency to operate near (one of) the resonant peaks of the resonant tank circuit 51. The phase controller 64 can be coupled to a local oscillator 65, providing an oscillation signal which is combined with an output of the amplitude controller and fed as output 56 of the driver circuit. The control unit 60 can be provided as a field-programmable gate array (FPGA).

It will be convenient to note that the injected power, measured at the output 56 of the driver circuit (or the input of the resonant tank circuit), or the control effort of the amplitude controller 63, contains information regarding the damping of the magnetic field generated by resonant tank circuit 51 and, hence, regarding the detected foreign objects. Therefore, any of these signals can be used as an indication of detected foreign objects. Control unit 60 can comprises further decision blocks, e.g. for comparing a detected or measured signal with a threshold.

The frequency of the AC current in detection coil 21, i.e. the oscillation frequency, will generally depend on the application and may further depend on the frequency at which the power transmitter coil 111 is operated. The (resonant) frequency of detection coil 21 is advantageously between 1 kHz and 10 MHz, advantageously between 10 kHz and 1 MHz, advantageously between 20 kHz and 500 kHz, advantageously between 90 kHz and 300 kHz. The indicated frequency ranges may be beneficial for FOD applications in inductive power transfer to electric or hybrid vehicles. The frequency of the current in detection coil 21 is advantageously not equal to the driving frequency of the IPT system 10. Assuming the IPT system, e.g. power transmitter coil 111, is driven with a first (resonant) frequency f1, advantageously the driving frequency *f*2 of detection coil 21 falls between two consecutive odd harmonic frequencies of f1, in which f1 is to be considered a first harmonic. Most advantageously, f2 falls between the first and third harmonic frequency of f1.

The resonant tank circuit for detection coil 21 is advantageously designed such that it has a high quality factor, e.g. higher than or equal to 100, to ensure a high detection sensitivity.

When a metal or otherwise electrically conducting object, i.e. a foreign object, is located inside the magnetic field of the detection coil 21, an eddy current is induced in the foreign object which dissipates additional power and tends to decrease the oscillation amplitude in detection coil 21, or in other words, the foreign object dampens the magnetic field. The presence of such a foreign object can either be detected by determining the speed with which the amplitude of the oscillation decreases or by determining the amount of power that must be injected in the driver circuit 21 in order to maintain the oscillation amplitude constant or steady. In the invention, the electrical power injected in driver circuit 22 and detection coil 21 for maintaining a steady magnetic field, e.g. a constant oscillation amplitude, is measured by the control unit 24. The control unit 24 is advantageously configured to compare the measured power, e.g. with a threshold. When for example, the measured power exceeds the threshold, a signal representative of a foreign object detection may be generated in control unit 24. The signal may indicate a faulty situation, e.g. to a user interface, or to transmitter system 11, which may be configured to stop power transfer and/or block the initiation of power transfer. The amount of power increase depends on, for example, the material and size of the metal object, the coupling between the detection coil and the foreign object, and the oscillation frequency. A power measurement advantageously allows for measuring continuously.

In aspects of the present invention, therefore the dissipation/damping of the magnetic field is measured, instead of inductance or magnetic coupling between a source coil and a receiver coil. This allows the measurement system to be less sensitive to mechanical variation in the assembly of IPT system 10, e.g. small movements of internal ferrites in housing 114. Small changes in the position of internal ferrites of the system with respect to the FOD detection coil (caused by mechanical deformation and stress) results in a change in inductance. The ferrites are however typically chosen such that they generate very little losses around the driving frequency (f1) of the power transmitter coil. Therefore the losses do not vary significantly under mechanical variation. As a result, measuring the dissipation or damping instead of inductance or magnetic coupling between coils as in the prior art, results in a reduced sensitivity to mechanical variation.

The control unit 24 advantageously comprises a circuit for measuring the electrical power dissipated by the detection coil 21 and its magnetic field and optionally a decision block to determine whether there is a foreign object detected. The decision block may comprise programmable code implementing a foreign object detection algorithm. Optionally, the foreign object detection system further comprises one or more of: a temperature sensor for compensation of temperature variation, a position measurement system for determining the relative position and optionally the relative orientation between the mobile pad and the base pad, a communication interface between the mobile device and the ground assembly to transfer a signature of the mobile device, an internet connection to enable updating the signature information and processing algorithm in-field.

However, the increased power dissipation is not only caused by the foreign object, but also by two other factors that preferably are not to be ignored in a practical implementation. The first factor is the power dissipation in the power receiver circuit, and the second factor is the power dissipation in friendly parasitic components in the device. Such friendly parasitic components include parts of the inductive charging system, parts of the environment causing parasitic losses without the risk of generating hazardous heating. These parts may interact with the magnetic fields of the IPT system but the heating of these parts is limited that it does not pose a hazard. To prevent false detection of foreign objects, a foreign object detection signature of mobile devices, such as a vehicle, and known friendly parasitic components may be used. By way of example, a signature of the receiver system 12 may be used which is emitted by receiver system 12, e.g. when the receiver system 12 is approaching the transmitter system 11. Using this signature, the receiver system 12 may be filtered out in the decision block. Other ways of coping with friendly parasitic components include adjusting the threshold of the measured power based on a set of information, for example the position of the receiver system, its signature, a measured temperature etc. Alternatively, an adaptive system may be used, in which the foreign object detection threshold is dynamically determined.

In the above examples, the FOD device 20 is described to comprise one detection coil 21. It may be advantageous to dispose a plurality of separate detection coils 21 juxtaposed, e.g. in one or more arrays, in order to span the entire area of the power transmitter coil 111. Each of the separate detection coils may be driven separately or sequentially. Sequentially driving the different detection coils may be beneficial as the magnetic fields will not disturb one another. However, each of the detection coils 21 should be sufficiently large to provide a sufficient detection range in the vertical direction in the interface 13, e.g. between the power transmitter coil 11 and the power receiver coil 12). The vertical detection range is approximately once to twice the diameter of the detection coil. Advantageously, each of the one or more detection coils 21 encloses an area which is at least 1/6^{th} of the area enclosed by the power transmitter coil 111, advantageously at least 1/5^{th}, advantageously at least 1/4^{th}.

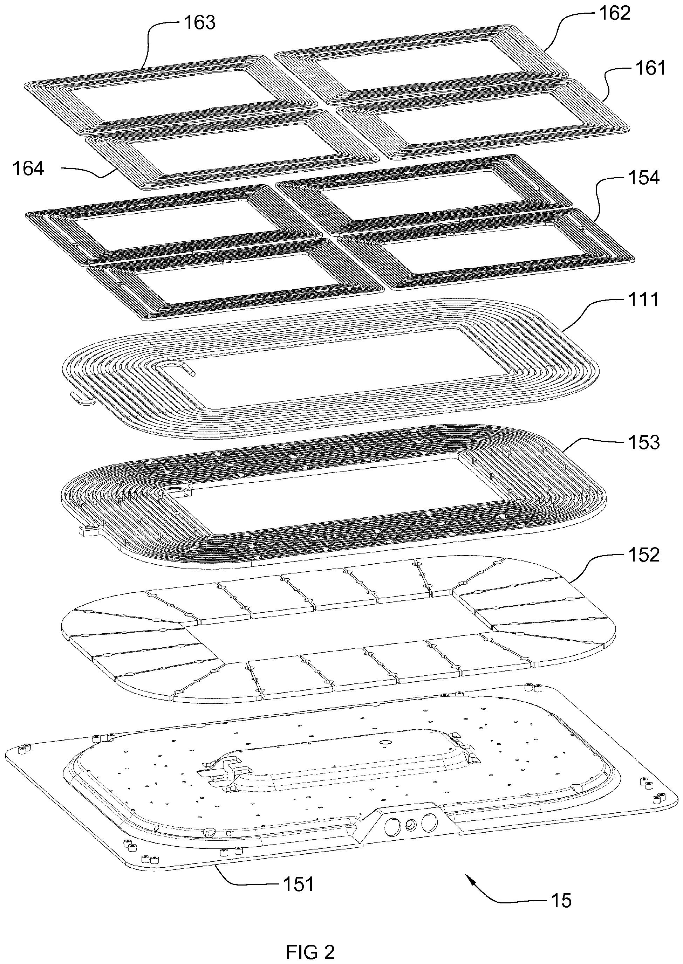

Referring to Fig. 2, an example of a layout of a base pad 15 or ground assembly is shown. The power transmitter coil 111 is housed in a support tray 153 comprising tracks accommodating the loops of the conductive thread of the coil. In this example, power transmitter coil 111 is arranged as a planar coil. Ferrite tiles 152 are disposed underneath the support tray 153, on a base support 151. On top of the power transmitter coil 111, a support tray 154 for the detection coils 161-164 is arranged. The support 154 comprises tracks accommodating loops of the conductive thread of the detection coils 161-164. In this example, each of the detection coils is a planar coil.

In this exemplary embodiment, there are four detection coils 161-164 arranged as petals, each one overlapping a quadrant of the power transmitter coil 111. Advantageously, coils detection coils 161-164 and power transmitter coil 111 are arranged such that they have parallel (winding) axes. That is, coils 161-164 are arranged in a same plane (perpendicular to the axes of the coils) which is parallel to the plane of coil 111. Each one of the detection coils 161-164 can have its own driver circuit and possibly, its own control unit. Alternatively, all detection coils can be connected to a single driver circuit and control unit. The driver circuit(s) can be configured to operate the detection coils simultaneously, or sequentially.

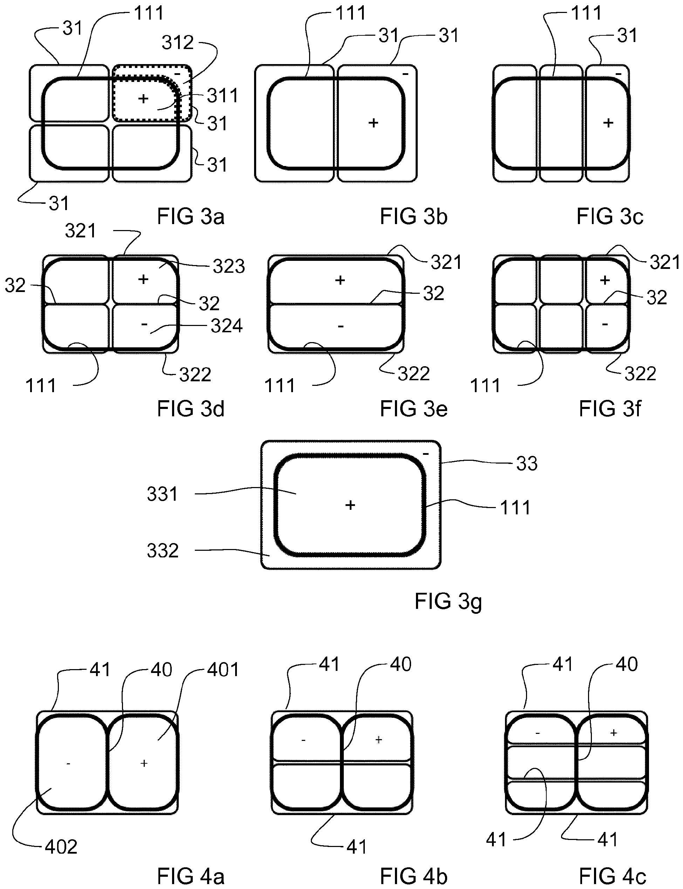

Referring to Figs. 3a-g, various examples of disposition of the detection coils 31 with respect to the power transmitter coil 111 can be envisaged in order to make the detection coils weakly magnetically coupled to the power transmitter coil. In the figures, the sign of the magnetic flux generated by the power transmitter coil, taking account of the polarity of the detection coils 31 is indicated by plus + and minus - signs.

In one example, advantageously, and referring to Figs. 3a-c, each of the one or more detection coils 31 are disposed such that they enclose a substantially zero net magnetic flux produced by the power transmitter coil 111. By way of example, each of the detection coils 31 enclose first areas 311 and second areas 312 in which the magnetic flux produced by the power transmitter coil 111 is substantially of equal magnitude and opposite sign. The first area 311 and second area 312 are indicated by dotted lines in Fig. 3a. The resulting net magnetic flux through the detection coil 31 is therefore substantially zero. A small nonzero net resulting flux may be tolerated, due to parasitic effects. By so doing, the magnetic coupling between the detection coils 31 and the power transmitter coil 111 is minimised. Advantageously, the magnetic coupling factor (or coefficient) *k* between each of the detection coils 31 and the power transmitter coil 111 is less than or equal to 0.2, advantageously less than or equal to 0.15, advantageously less than or equal to 0.1, advantageously less than or equal to 0.05. Indicated values of magnetic coupling factor refer to measurements with the receiver system 12 in Fig. 1 removed. The magnetic coupling factor can be measured with a LCR meter by comparing the outputs between an opened and a short circuited coil. Weakly coupled power transmitter and detection coils advantageously allow for performing FOD detection during effective power transfer in IPT system 10, since the presence of the power transmission magnetic field is not or weakly sensed by detection coils 31.

In Figs. 3a-c the detection coils 31 comprise one or more loops wound in a same direction, in an O-shape. In this case, to obtain a zero net magnetic flux, the first area 311 overlaps the area enclosed by the power transmitting coil 111 and the second area 312 extends outside the cross sectional area of the power transmitting coil.

In another example, and referring to Figs. 3d-f, detection coils 32 comprise loops disposed in a figure-8 shape. Figure-8 loops may be formed by taking one large conducting loop, pinching it in the middle to obtain two approximately equal-sized smaller loops and twisting one loop relative to the other loop by 180° to obtain two approximately equal-sized lobes. Each detection coil therefore comprises a first lobe 321 and a second lobe 322 in which the current flows in opposite (counter-rotating) directions. The magnetic flux passing through the cross sectional area 323 of lobe 321 and through the cross sectional area 324 of lobe 322 induces a voltage therein which is opposite in sign, and therefore the net electromotive force induced by the magnetic flux generated by the power transmitter coil through the lobes has opposite sign. When the magnetic flux generated by the power transmitter coil through the two lobes is equal in magnitude, the induced electromotive force cancels out, meaning that the detection coil 32 has substantially zero magnetic coupling with the power transmitter coil 111. In these cases, there is no need that the detection coil would extend outside the perimeter of the power transmitter coil.

In yet another example, referring to Fig. 3g, the detection coil 33 may have a cross sectional area which completely overlaps the (cross sectional area of the) power transfer coil 111. The cross sectional area of the detection coil may be larger than that of the power transfer coil, so that the magnetic flux through portion 331 of the surface of the detection coil which overlaps with the cross sectional area of the power transfer coil 111 has an opposite sign compared to the magnetic flux through portion 332 of the surface of the detection coil which extends beyond the cross sectional area of the power transfer coil 111 due to the fact that the magnetic field lines have opposite directions.

Referring again to Fig. 2, the detection coils 161 and 162 can be connected to each other so as to form a figure-8 coil. Likewise, the detection coils 163 and 164 can be connected to each other to form a second figure-8 coil. By so doing, a configuration similar to Fig. 3d is obtained.

Regardless whether detection coils 161-164 are used as figure-0 coils or as figure-8 coils, the coils may be disposed and/or electrically connected such that a current flowing through juxtaposed detection coils flows in a same direction, or in counter-rotating directions. By way of example, detection coils 161 and 164 may be electrically connected to the driver circuit such that an instantaneous current through detection coil 161 flows counterclockwise. The instantaneous current (at the same instant of time) through detection coil 164 may flow counterclockwise, or, alternatively, clockwise.

In Figs. 4a-c alternative configurations are illustrated in case the power transmitter coil 40 is wound in a figure-8 shape. In this case, the detection coils 41 may be of simple figure-O shape and at least partially overlap both lobes 401 and 402 of the power transmitter coil 40. Since the magnetic field in lobes 401 and 402 has inversed polarity, the magnetic flux through lobe 401 and the magnetic flux through lobe 402 have substantially equal magnitude but opposite sign, which is indicated by plus + and minus - signs. Therefore the net magnetic flux through the cross sectional area of detection coil(s) 41 is substantially zero if the two lobes are equal-sized.

It will be convenient to note that the FOD device can be implemented with one or more detection coils either in the transmitter system 11, or in the receiver system 12, or in both systems in case the interface 13 is too large to bridge by only one FOD device.

Advantageous applications for FOD devices according to aspects described herein are in wireless charging of vehicles. In such a case, the ground assembly may comprise power emitting means for emitting power to a receiving coil of the vehicle assembly. Preferably, the power receiving means comprise at least one transmitting coil composed of one or more loops of conductive material like copper or aluminium suitable for inductive power transfer. The ground assembly may further comprise shielding for the electromagnetic (EM) fields generated during inductive power transfer, for instance to shield people near the vehicle, and electronics, like a printed circuit board (PCB) inside the ground assembly. This shielding may be provided by various materials like magnetic, ferromagnetic or conductive materials. Preferably, the ground side of the transmitting coil is shielded by ferrite. Advantageously, the ground assembly further comprises an additional coil of a conductive material arranged outside the perimeter of the transmitting coil. This short circuited coil provides a shield to reduce the level of stray fields leaking into the environment. The ground assembly further comprises a high frequency power supply unit that powers the transmitting coil with high current (e.g. 10A and above) and/or voltage (e.g. 100V and above), single phase, high frequency AC (e.g. kHz to MHz) electrical energy from the single phase or three phase mains. The ground assembly is advantageously housed in a housing that eliminates dirt, debris or other materials form damaging or limiting the performance of the ground assembly components.

The ground assembly advantageously comprises additional auxiliary components that for instance provide safety features. One of those components is a foreign object detection (FOD) device for detecting metallic or electrically conductive debris in the magnetic field space of the transmitting coil. Additional components may be included which provide living object protection (LOP) for detecting and/or deterring living objects near the transmitting coil, and/or additional components for positioning detection of a mobile pad relative to the ground assembly.

The mobile pad, e.g. a vehicle assembly, may comprise power receiving means for receiving power from a transmitting coil of the ground assembly. Advantageously, the power receiving means comprise at least one receiving coil composed of one or more loops of conductive material suitable for inductive power transfer. The mobile pad may further comprise shielding for the electric and magnetic fields generated during inductive power transfer, for instance to shield people inside or near the pad, and electronics, like a printed circuit board (PCB) inside the pad. This shielding may be provided by various materials like magnetic, ferromagnetic or conductive materials. Preferably, the vehicle side of the receiving coil is shielded by ferrite. Advantageously, an additional coil of conductive material like copper or aluminium forming a short circuit is provided outside the perimeter of the receiving coil. This short circuited shielding coil provides a passive shield to reduce the level of stray fields leaking into the environment. Optionally, the short circuit is inducible or the impedance can be controlled to regulate the influence on the EM field, which can for instance be beneficial when a mobile pad positioning system is provided (either in the ground assembly or the mobile pad) supported by an EM based component. The shielding coil can also be powered to provide an active shield. The mobile pad may further comprise a housing to eliminate dirt, debris or other materials form damaging or limiting the performance of components inside the housing.

## Claims

1. Apparatus for wireless power transfer, comprising:
a power transfer coil (111, 40) configured for inductive power transfer and defining a first plane,
a foreign object detecting device (20) comprising at least one detection coil (21, 31, 32, 41) defining a second plane substantially parallel to the first plane, wherein each of the at least one detection coil encloses a first area which at least partially overlaps with a second area enclosed by the power transfer coil,
wherein the foreign object detecting device comprises a driver circuit (22, 50) coupled to the at least one detection coil and configured to generate a magnetic field with the at least one detection coil and a control unit (24, 60) coupled to the driver circuit and configured to measure a value representative of a damping of the magnetic field,
**characterised in that** the control unit (24, 60) is configured to measure an electrical power supplied to the at least one detection coil in order to control an amplitude of oscillation in the at least one detection coil to a steady value for detecting foreign objects, and preferably **in that** the control unit is configured to continuously measure the electrical power while maintaining the amplitude of oscillation at the steady value.

2. Apparatus of claim 1, wherein the control unit is configured to compare the electrical power measured with a threshold value.

3. Apparatus of any one of the preceding claims, wherein each of the at least one detection coil is positioned relative to the power transfer coil such that a magnetic flux generated by the power transfer coil through a first portion (311, 323, 401) of the first area and a magnetic flux generated by the power transfer coil through a second portion (312, 324, 402) of the first area, taking account of a polarity of the detection coil in the first portion and in the second portion, are of opposite sign and of substantial equal magnitude resulting in the detection coil having a magnetic coupling coefficient with respect to the power transfer coil of 0.2 or less, preferably 0.15 or less, preferably 0.1 or less, preferably wherein the first portion (311) of the first area overlaps the second area and wherein the second portion (312) of the first area is located adjacent to the second area.

4. Apparatus of any one of the preceding claims, wherein at least one of the at least one detection coil is shaped as a figure-8 coil (32) comprising two lobes (321, 322), wherein a first one (321) of the two lobes encloses the first portion (323) and wherein the second one (322) of the two lobes encloses the second portion (324).

5. Apparatus of any one of the preceding claims, wherein a ratio between the first area to the second area is at least 1:6, preferably at least 1:4.

6. Apparatus of any one of the preceding claims, comprising a capacitor connected in parallel with the at least one detection coil to form a resonant tank circuit (51).

7. Apparatus of claim 6, comprising a voltage metering circuit (53) or a current metering circuit coupled to the control unit and configured to measure the amplitude of oscillation.

8. Apparatus of any one of the preceding claims, comprising a plurality of the at least one detection coil, wherein the plurality of detection coils are connected to a single driver circuit and control unit, wherein the driver circuit is configured to operate the plurality of detection coils sequentially.

9. Apparatus of any one of the preceding claims, wherein the power transfer coil is configured to be driven at a first frequency, wherein the driver circuit is configured to drive the at least one detection coil at a second frequency different from the first frequency, preferably wherein the second frequency falls in between two consecutive odd harmonic frequencies of the first frequency, preferably wherein the second frequency ranges between a first and a third harmonic frequency of the first frequency.

10. Apparatus of any one of the preceding claims, wherein the driver circuit is configured to drive the at least one detection coil while a power is transferred through the power transfer coil.

11. Vehicle charging system, comprising the apparatus of any one of the preceding claims.

12. Method for detecting foreign objects in a space of a first magnetic field of a power transfer system, comprising:
inducing a second magnetic field in the space of the first magnetic field with at least one detection coil different from a power transfer coil generating the first magnetic field, wherein each of the at least one detection coil and the power transfer coil have substantially parallel axes and each of the at least one detection coil encloses a first area which at least partially overlaps with a second area enclosed by the power transfer coil, and
measuring a value indicative of a damping of the second magnetic field,
**characterised in that** measuring the value comprises measuring and controlling an electrical power supplied to the at least one detection coil to maintain an amplitude of oscillation in the at least one detection coil steady for detecting foreign objects, and preferably **in that** the electrical power is measured continuously.

13. Method of claim 12, further comprising comparing the electrical power with a threshold value.

14. Method of claim 12 or 13, wherein the second magnetic field is induced with a resonant frequency.

15. Method of any one of the claims 12 to 14, wherein each of the at least one detection coil is positioned relative to the power transfer coil such that a magnetic flux generated by the power transfer coil through a first portion of the first area and a magnetic flux generated by the power transfer coil through a second portion of the first area, taking account of a polarity of the detection coil in the first portion and in the second portion, are of opposite sign and of substantial equal magnitude resulting in a magnetic coupling coefficient between the two being 0.2 or less.

## Patentansprüche

1. Gerät zur drahtlosen Leistungsübertragung, umfassend:
eine Leistungsübertragungsspule (111, 40), die für eine induktive Leistungsübertragung konfiguriert ist und eine erste Ebene definiert,
eine Fremdkörperdetektionsvorrichtung (20), umfassend mindestens eine Detektionsspule (21, 31, 32, 41), die eine zweite Ebene definiert, die im Wesentlichen parallel zu der ersten Ebene ist, wobei jede der mindestens einen Detektionsspule einen ersten Bereich umschließt, der mindestens teilweise mit einem zweiten Bereich überlappt, der von der Leistungsübertragungsspule umschlossen ist,
wobei die Fremdkörperdetektionsvorrichtung eine Treiberschaltung (22, 50), die mit der mindestens einen Detektionsspule gekoppelt und dazu konfiguriert ist, ein Magnetfeld mit der mindestens einen Detektionsspule zu erzeugen, und eine Steuereinheit (24, 60), die mit der Treiberschaltung gekoppelt und dazu konfiguriert ist, einen Wert zu messen, der für eine Dämpfung des Magnetfelds repräsentativ ist, umfasst,
**dadurch gekennzeichnet, dass** die Steuereinheit (24, 60) dazu konfiguriert ist, eine elektrische Leistung zu messen, die der mindestens einen Detektionsspule zugeführt wird, um eine Schwingungsamplitude in der mindestens einen Detektionsspule auf einen konstanten Wert zum Detektieren von Fremdkörpern zu steuern, und vorzugsweise dadurch, dass die Steuereinheit dazu konfiguriert ist, die elektrische Leistung kontinuierlich zu messen, während die Schwingungsamplitude auf dem konstanten Wert gehalten wird.

2. Gerät nach Anspruch 1, wobei die Steuereinheit dazu konfiguriert ist, die gemessene elektrische Leistung mit einem Schwellenwert zu vergleichen.

3. Gerät nach einem der vorhergehenden Ansprüche, wobei jede der mindestens einen Detektionsspule bezogen auf die Leistungsübertragungsspule so positioniert ist, dass ein von der Leistungsübertragungsspule erzeugter magnetischer Fluss durch einen ersten Abschnitt (311, 323, 401) des ersten Bereichs und ein von der Leistungsübertragungsspule erzeugter magnetischer Fluss durch einen zweiten Abschnitt (312, 324, 402) des ersten Bereichs unter Berücksichtigung einer Polarität der Detektionsspule in dem ersten Abschnitt und in dem zweiten Abschnitt ein entgegengesetztes Vorzeichen und eine im Wesentlichen gleiche Größe aufweisen, was dazu führt, dass die Detektionsspule einen magnetischen Kopplungskoeffizienten in Bezug auf die Leistungsübertragungsspule von 0,2 oder weniger, vorzugsweise 0,15 oder weniger, vorzugsweise 0,1 oder weniger aufweist, wobei vorzugsweise der erste Abschnitt (311) des ersten Bereichs mit dem zweiten Bereich überlappt und wobei sich der zweite Abschnitt (312) des ersten Bereichs angrenzend an den zweiten Bereich befindet.

4. Gerät nach einem der vorhergehenden Ansprüche, wobei mindestens eine der mindestens einen Detektionsspule als eine Achterspule (32) geformt ist, die zwei Keulen (321, 322) umfasst, wobei eine erste (321) der beiden Keulen den ersten Abschnitt (323) umschließt und wobei die zweite (322) der beiden Keulen den zweiten Abschnitt (324) umschließt.

5. Gerät nach einem der vorhergehenden Ansprüche, wobei ein Verhältnis zwischen dem ersten Bereich und dem zweiten Bereich mindestens 1:6, vorzugsweise mindestens 1:4 beträgt.

6. Gerät nach einem der vorhergehenden Ansprüche, umfassend einen Kondensator, der parallel zu der mindestens einen Detektionsspule geschaltet ist, um einen Schwingkreis (51) zu bilden.

7. Gerät nach Anspruch 6, umfassend eine Spannungsmessschaltung (53) oder eine Strommessschaltung, die mit der Steuereinheit gekoppelt und dazu konfiguriert ist, die Schwingungsamplitude zu messen.

8. Gerät nach einem der vorhergehenden Ansprüche, umfassend eine Vielzahl der mindestens einen Detektionsspule, wobei die Vielzahl von Detektionsspulen mit einer einzigen Treiberschaltung und Steuereinheit verbunden sind, wobei die Treiberschaltung dazu konfiguriert ist, die mehreren Detektionsspulen in Reihe zu betreiben.

9. Gerät nach einem der vorhergehenden Ansprüche, wobei die Leistungsübertragungsspule dazu konfiguriert ist, mit einer ersten Frequenz angetrieben zu werden, wobei die Treiberschaltung dazu konfiguriert ist, die mindestens eine Detektionsspule mit einer zweiten Frequenz anzutreiben, die sich von der ersten Frequenz unterscheidet, vorzugsweise wobei die zweite Frequenz zwischen zwei aufeinanderfolgende ungeradzahlige harmonische Frequenzen der ersten Frequenz fällt, wobei vorzugsweise die zweite Frequenz zwischen einer ersten und einer dritten harmonischen Frequenz der ersten Frequenz liegt.

10. Gerät nach einem der vorhergehenden Ansprüche, wobei die Treiberschaltung dazu konfiguriert ist, mindestens eine Detektionsspule anzutreiben, während eine Leistung durch die Leistungsübertragungsspule übertragen wird.

11. Fahrzeugladesystem, umfassend das Gerät nach einem der vorhergehenden Ansprüche.

12. Verfahren zum Detektieren von Fremdkörpern in einem Raum eines ersten Magnetfelds eines Leistungsübertragungssystems, umfassend:
Induzieren eines zweiten Magnetfelds im Raum des ersten Magnetfelds mit mindestens einer Detektionsspule, die sich von einer Leistungsübertragungsspule unterscheidet, die das erste Magnetfeld erzeugt, wobei jede der mindestens einen Detektionsspule und der Leistungsübertragungsspule im Wesentlichen parallele Achsen aufweist und jede der mindestens einen Detektionsspule einen ersten Bereich umschließt, der mindestens teilweise mit einem zweiten Bereich überlappt, der von der Leistungsübertragungsspule umschlossen ist, und
Messen eines Werts, der eine Dämpfung des zweiten Magnetfelds angibt,
**dadurch gekennzeichnet, dass** das Messen des Werts das Messen und Steuern einer der mindestens einen Detektionsspule zugeführten elektrischen Leistung umfasst, um eine Schwingungsamplitude in der mindestens einen Detektionsspule zum Detektieren von Fremdkörpern konstant zu halten, und vorzugsweise dadurch, dass die elektrische Leistung kontinuierlich gemessen wird.

13. Verfahren nach Anspruch 12, ferner umfassend das Vergleichen der elektrischen Leistung mit einem Schwellenwert.

14. Verfahren nach Anspruch 12 oder 13, wobei das zweite Magnetfeld mit einer Resonanzfrequenz induziert wird.

15. Verfahren nach einem der Ansprüche 12 bis 14, wobei jede der mindestens einen Detektionsspule bezogen auf die Leistungsübertragungsspule so positioniert ist, dass ein von der Leistungsübertragungsspule erzeugter magnetischer Fluss durch einen ersten Abschnitt des ersten Bereichs und ein von der Leistungsübertragungsspule erzeugter magnetischer Fluss durch einen zweiten Abschnitt des ersten Bereichs unter Berücksichtigung einer Polarität der Detektionsspule in dem ersten Abschnitt und in dem zweiten Abschnitt ein entgegengesetztes Vorzeichen und eine im Wesentlichen gleiche Größe aufweisen, was zu einem magnetischen Kopplungskoeffizienten zwischen den beiden von 0,2 oder weniger führt.

## Revendications

1. Appareil permettant de transférer de l'énergie sans fil, comprenant :
une bobine de transfert (111, 40) de l'énergie conçue pour transférer de l'énergie par induction et définissant un premier plan,
un dispositif de détection (20) des corps étrangers comprenant au moins une bobine de détection (21, 31, 32, 41) définissant un second plan sensiblement parallèle au premier plan, dans lequel chacune de l'au moins une bobine de détection enferme une première zone, laquelle au moins chevauche partiellement une seconde zone enfermée par la bobine de transfert de l'énergie,
dans lequel le dispositif de détection des corps étrangers comprend un circuit d'attaque (22, 50) couplé à l'au moins une bobine de détection et conçu pour générer un champ magnétique à l'aide de l'au moins une bobine de détection et une unité de commande (24, 60) couplée au circuit d'attaque et conçue pour mesurer une valeur représentant un amortissement du champ magnétique,
**caractérisé en ce que** l'unité de commande (24, 60) est conçue pour mesurer une énergie électrique fournie à l'au moins une bobine de détection afin de commander une amplitude d'oscillation dans l'au moins une bobine de détection à une valeur constante pour détecter des corps étrangers, et, de préférence que l'unité de commande est conçue pour mesurer en continu l'énergie électrique lorsque l'amplitude d'oscillation est maintenue à la valeur constante.

2. Appareil selon la revendication 1, dans lequel l'unité de commande est conçue pour comparer l'énergie électrique mesurée à une valeur seuil.

3. Appareil selon l'une quelconque des revendications précédentes, dans lequel chacune de l'au moins une bobine de détection est positionnée par rapport à la bobine de transfert de l'énergie de telle sorte qu'un flux magnétique généré par la bobine de transfert de l'énergie à travers une première partie (311, 323, 401) de la première zone et un flux magnétique généré par la bobine de transfert de l'énergie à travers une seconde partie (312, 324, 402) de la première zone, compte tenu d'une polarité de la bobine de détection dans la première partie et dans la seconde partie, présentent des signes opposés et une amplitude sensiblement égale, la bobine de détection présentant ainsi un coefficient de couplage magnétique par rapport à la bobine de transfert de l'énergie de 0,2 ou inférieur, de préférence de 0,15 ou inférieur, de préférence de 0,1 ou inférieur, de préférence dans lequel la première partie (311) de la première zone chevauche la seconde zone et dans lequel la seconde partie (312) de la première zone est située adjacente à la seconde zone.

4. Appareil selon l'une quelconque des revendications précédentes, dans lequel l'au moins une de l'au moins une bobine de détection est conçue sous la forme d'une bobine en forme de 8 (32) comprenant deux lobes (321, 322), dans lequel un premier (321) des deux lobes enferme la première partie (323) et dans lequel le second (322) des deux lobes enferme la seconde partie (324).

5. Appareil selon l'une quelconque des revendications précédentes, dans lequel un rapport entre la première zone et la seconde zone est d'au moins 1:6, de préférence d'au moins 1:4.

6. Appareil selon l'une quelconque des revendications précédentes, comprenant un condensateur connecté en parallèle avec l'au moins une bobine de détection pour former un circuit-bouchon (51) résonnant.

7. Appareil selon la revendication 6, comprenant un circuit de mesure (53) de la tension ou un circuit de mesure du courant couplé à l'unité de commande et conçu pour mesurer l'amplitude de l'oscillation.

8. Appareil selon l'une quelconque des revendications précédentes, comprenant une pluralité de l'au moins une bobine de détection, dans lequel la pluralité de bobines de détection sont connectées à un seul circuit d'attaque et unité de commande, dans lequel le circuit d'attaque est conçu pour faire fonctionner de manière séquentielle la pluralité de bobines de détection.

9. Appareil selon l'une quelconque des revendications précédentes, dans lequel la bobine de transfert de l'énergie est conçue pour être attaquée à une première fréquence, dans lequel le circuit d'attaque est conçu pour attaquer l'au moins une bobine de détection à une seconde fréquence différente de la première fréquence, de préférence dans lequel la deuxième fréquence tombe entre deux fréquences harmoniques impaires consécutives de la première fréquence, de préférence dans lequel la deuxième fréquence est comprise entre une première et une troisième fréquence harmonique de la première fréquence.

10. Appareil selon l'une quelconque des revendications précédentes, dans lequel le circuit d'attaque est conçu pour attaquer l'au moins une bobine de détection lorsqu'une énergie est transférée à travers la bobine de transfert de l'énergie.

11. Système de recharge de véhicule, comprenant l'appareil selon l'une quelconque des revendications précédentes.

12. Procédé de détection des corps étrangers dans un espace d'un premier champ magnétique d'un système de transfert de l'énergie, comprenant :
l'induction d'un second champ magnétique dans l'espace du premier champ magnétique à l'aide de l'au moins une bobine de détection différente d'une bobine de transfert de l'énergie générant le premier champ magnétique, dans lequel chacune de l'au moins une bobine de détection et de la bobine de transfert de l'énergie comporte des axes sensiblement parallèles et chacune de l'au moins une bobine de détection enferme une première zone, laquelle chevauche au moins partiellement une seconde zone enfermée par la bobine de transfert de l'énergie, et
la mesure d'une valeur indiquant un amortissement du second champ magnétique,
**caractérisé en ce que** la mesure de la valeur comprend la mesure et la commande d'une énergie électrique fournie à l'au moins une bobine de détection pour maintenir une amplitude d'oscillation dans l'au moins une bobine de détection stable pour détecter des corps étrangers, et, de préférence que l'énergie électrique est mesurée en continu.

13. Procédé selon la revendication 12, comprenant en outre la comparaison de l'énergie électrique avec une valeur seuil.

14. Procédé selon la revendication 12 ou 13, dans lequel le second champ magnétique est induit à une fréquence résonnante.

15. Procédé selon l'une quelconque des revendications 12 à 14, dans lequel chacune de l'au moins une bobine de détection est positionnée par rapport à la bobine de transfert de l'énergie de telle sorte qu'un flux magnétique généré par la bobine de transfert de l'énergie à travers une première partie de la première zone et un flux magnétique généré par la bobine de transfert de l'énergie à travers une seconde partie de la première zone, compte tenu d'une polarité de la bobine de détection dans la première partie et dans la seconde partie, présentent des signes opposés et une amplitude sensiblement égale, un coefficient de couplage magnétique entre les deux étant ainsi de 0,2 ou inférieur.
